# EUROPEAN PATENT SPECIFICATION

(11) **EP 0 240 318 B1**
(45) Date of publication and mention of the grant of the patent: **15.12.1993**
(21) Application number: 87302803.9
(22) Date of filing: 31.03.1987
(51) Int. Cl.: F01D 25/30, F02C 7/24

(54) **Apparatus and method for suppression of turbine engine noise**
Abgasschalldämpfer für Gasturbinen
Amortisseur de bruit des turbines à gaz

(30) Priority: 01.04.1986 US 846771
(43) Date of publication of application: 07.10.1987
(73) Proprietor: AlliedSignal Inc., Morristown, New Jersey 07962-2245 (US)
(72) Inventor: Lyon, Graig A., Mesa Arizona 85202 (US); Sheroan, Yogendra, Scottsdale Arizona 85260 (US); Ross, David F., Scottsdale Arizona 85258 (US)
(74) Representative: Rees, David Christopher

(56) References cited:
- US-A- 3 194 341
- US-A- 4 128 769
- US-A- 4 244 441
- US-A- 4 371 054

## Description

The present invention relates generally to engine exhaust gas noise suppression, and more particularly to apparatus, and methods, for cooling and attenuating the noise of exhaust gas discharged from a gas turbine engine.

With increasing frequency, gas turbine engines are being used in both stationary and mobile ground installations to perform a variety of functions such as generating electricity, providing a flow of compressed air, or furnishing mechanical power via a rotating shaft. In such ground installations, exhaust gas noise suppression apparatus typically must meet three performance criteria.

First and perhaps foremost, the suppression apparatus must satisfactorily attenuate the engine noise associated with the hot, high velocity gas discharged from the engine. As is well known, this noise is of a fairly complex nature, being generated across varying frequency bands at different intensities, depending on the type and size of the particular engine. The primary noise components which must be attenuated however are "core" and "turbine" noise.

Core noise is a low frequency noise component believed to be at least partly caused by the combustion processes within the engine, while turbine noise is a high frequency noise component caused by the interaction of high velocity gases within the engine's turbine section. The frequency spectrum of core noise is essentially broadband, peaking at a relatively low frequency around 200 to 800 Hz where most of the energy of such core noise is concentrated. Turbine noise, on the other hand, is a significantly higher frequency noise phenomenon, having both broadband and discrete spectral components, peaking at a relatively high frequency around 6,000 to 10,000 Hz.

The second performance criteria which often must be met is that the hot exhaust gas must be cooled before its discharge to atmosphere to protect operating or other personnel in the vicinity of the engine from potential burn injuries. Additionally it is often desirable to generate (via the suppression apparatus) a cooling flow which serves not only to lower the ultimate discharge temperature of the exhaust gas, but also provides for cooling of miscellaneous equipment adjacent the engine and/or the noise suppression apparatus.

The third performance criteria is that the particular noise suppression apparatus should not inordinately restrict the engine's exhaust gas flow.

Conventional apparatus used to cool and attenuate the noise of turbine engine exhaust gas typically must compromise between and among these three performance criteria. This previously necessary compromise is due to the high desirability of meeting the three criteria with suppression apparatus which fits within a suitably compact space envelope. For example, if a sufficient number of noise attenuating devices are positioned within the typical conventional exhaust gas sound attenuator to satisfactorily attenuate both the core and turbine noise components, the suppressor is no longer compact and often approaches the size of the engine which it is designed to silence. On the other hand, if a suitable degree of compactness us achieved, other difficulties follow, such as a relatively high degree of gas flow restriction, insufficient noise reduction, and/or inability adequately to cool the exhaust gas flow prior to its discharge to atmosphere.

US-A-4371054 discloses a sound attenuation device for turbine engine exhaust gases which includes a housing having an inlet duct and a discharge flow path leading to an outlet. The duct is so shaped to discharge the gases into the housing with an abrupt expansion in order to cause an acoustic propagation mismatch. The housing also includes a sound absorbing member via which the gases pass.

Attenuators with various differing features are, of course, known. For example, US-A-4244441 suggests the use of a broad band acoustic attenuator for attenuating gas turbine engine noise in which a plurality of axially extending open-ended perforated cylinders are arranged concentrically within the exhaust duct of the engine. US-A-3194341 discloses a sound absorber for a pulse jet burner in which the gases are forced to follow a convoluted path while in US-A-4128769, a muffler is provided for a gas turbine engine in order to both cool and silence the exhaust gases.

Accordingly, it is an object of the present invention to provide turbine engine exhaust gas noise suppression and cooling apparatus, and associated methods, which eliminate or minimise the above-mentioned and other problems typically associated with conventional apparatus and methods.

According to the present invention, there is provided a sound attenuation device for turbine engine exhaust gases, comprising a housing having an inlet duct and a discharge flow path leading to an outlet, in which the duct is so shaped to discharge the gases into the housing with an abrupt expansion to cause an acoustic propagation impedance mismatch, and the housing includes a reactive sound attenuation chamber and a resonant sound attenuation structure, characterised by a sound absorbing member within the housing past which the gases pass to define a serpentine discharge flow path and by an eduction duct for inducting a flow of cooling air in response to the exhaust gas flow and mixing the induced cooling air flow with the exhaust gas flow.

In carrying out the principles of the present invention, in accordance with a preferred embodiment thereof, the noise associated with exhaust gas discharged from a turbine engine is very effectively attenuated by sequentially subjecting the exhaust gas to three distinct sound suppression mechanisms. First, the exhaust gas is flowed into, discharged in, and caused to abruptly expand within an expansion chamber configured to attenuate gas noise by creating an acoustic propagation impedence mismatch between the geometries of the gas inlet duct work and the expansion chamber. Secondly, gas noise within the chamber is transmitted to reactive sound attenuating means and resonant sound attenuating means preferably connected in a parallel, overlapping relationship. Finally, the discharged gas is forced outwardly from the chamber through a sound absorbing flow path having a serpentine configuration and defined in part by a sound absorbing member which is preferably hollow and filled with a bulk sound absorbing material.

This threefold sound suppression technique is effected in a preferred embodiment of the present invention by a uniquely configured, very compact sound absorbing apparatus comprising wall means which define a first chamber, a second chamber having an outlet and communicating with the first chamber through a transfer passage, and reactive sound attenuating chamber communicating with the first chamber through a perforated section of an interior dividing wall. A latticed wall resonant sound attenuator is preferably positioned within the sound attenuating chamber. The sound attenuating chamber preferably overlaps the reactive attenuator and communicates with the first chamber through a portion of the perforated dividing wall section. The hollow sound absorbing member filled with a bulk sound absorbing material preferably has a perforated outer wall and is preferably positioned in the second chamber to create the serpentine flow path extending between the transfer passage and the apparatus outlet.

Preferably, therefore, the device includes a baffle dividing the housing into first and second subchambers communicating via a transfer passage, the duct opening into the first subchamber and the sound absorbing member being within the second sub-chamber whereby the baffle also defines in part the serpentine discharge flow path. Thus, the sound absorbing means is effectively a baffle between the transfer passage ad the outlet. Furthermore, the reactive sound attenuation chamber is preferably defined by a dividing wall having a perforated section communicating with the first sub-chamber, and the resonant sound attenuation structure is positioned within the reactive sound attenuation chamber. Preferably, a first side of the latticed wall structure extends along a portion of the perforated section of the dividing wall and a second side of which is covered.

Preferably, the attenuation chamber communicates with the first sub-chamber through a second portion (or the balance) of the perforated section and extends past the second portion in opposite directions, generally parallel to the dividing wall.

Duct means are provided for receiving, diffusing, and discharging engine exhaust gas, the duct means preferably extending into the first subchamber in a first direction and having a gas discharge opening positioned in the first subchamber and facing in a second direction. During operation of the apparatus, exhaust gas noise is attenuated by flowing the gas sequentially through the duct means, into the first chamber, and outwardly through the serpentine flow path.

The exhaust gas is cooled using air provided by eduction means which function, in response to the exhaust gas flow, to induce a flow of cooling air from a source thereof and mix the cooling air with the exhaust gas flow. In one embodiment of the present invention, the eduction means are associated with the duct means through which exhaust gas is flowed into the apparatus. In another embodiment, a gas exhaust duct is connected to the apparatus, outlet, and the eduction means are associated with the gas exhaust duct to cool the gas expelled therethrough.

Preferably, the gas inlet duct into the first subchamber has a generally annular discharge opening.

The sound attenuating apparatus just described uniquely meets each of the three performance criteria previously discussed, while at the same time occupying only a relatively small space envelope. Specifically, this compact apparatus does not inordinately restrict the flow of engine exhaust gas, is highly effective in suppressing the noise associated with the exhaust gas - including the important "core" and "turbine" components thereof - and provides for efficient cooling of the hot exhaust gas.

According to another aspect to of the invention, there is provided a method of attenuating noise associated with exhaust gas discharged from an engine, which comprises the following steps, in the sequence set forth: flowing the gas through a duct; discharging gas from the duct into an expansion chamber in an manner creating an acoustic propagation impedance mismatch between the duct and the expansion chamber; and presenting the discharged gas to a reactive sound attenuating chamber in which resonant sound attenuating means are positioned thereby transmitting sound from the discharged gas to the attenuating means; characterised by subsequently flowing the discharged gas through a serpentine flow path defined in part by a sound absorbing member, and further characterised by educting cooling air from a source thereof for mixture with the gas.

Preferably, the method includes the step of expelling the discharged gas from the serpentine flow path, educting cooling air from a source thereof, and mixing the educted cooling air with the expelled gas. The discharging step may be performed by discharging the gas into an expansion chamber communicating with the reactive should attenuating chamber.

Preferably, the educting step includes mixing the educted cooling air with the exhaust gas as the exhaust gas flows through the duct means. Alternatively, the educting step includes mixing the educted cooling air with gas discharged from the outlet.

In another form, the invention extends to a method of attenuating engine exhaust gas noise, comprising the steps of: causing an abrupt expansion of the exhaust gas within a chamber; transmitting exhaust gas noise from within the chamber to reactive sound attenuating means and resonant sound attenuating means connected in an overlapping, parallel relationship; and forcing the exhaust gas outwardly from the chamber through a serpentine flow path bounded in part by a hollow sound absorbing member filled with a bulk sound absorbing material. In such a case, the preferred cooling step may be performed after the expansion causing step or the forcing step.

The invention may be carried into practice in various ways and some embodiments will now be described by way of example with reference to the accompanying drawings in which:-
Figure 1 is a perspective view partly in section, of a gas turbine engine exhaust noise suppressor in accordance with the present invention;
Figure 2 is a cross-sectional view to an enlarged scale taken along the line 2-2 in Figure 1;
Figure 2A is a fragmentary cross-sectional view to an enlarged scale taken along the line 2-2 of Figure 1, but illustrating a portion of an alternative embodiment of the noise suppressor in which eduction cooling apparatus is connected to its outlet;
Figure 3 is a cross-sectional view taken along the line 3-3 in Figure 1;
Figure 3A is a view similar to Figure 3 illustrating an alternative embodiment of the noise suppressor in which its inlet duct work is modified; and
Figure 4 is a fragmentary, enlarged scale cross-sectional view taken through the noise suppressor along the offset line 4-4 in Figure 2.

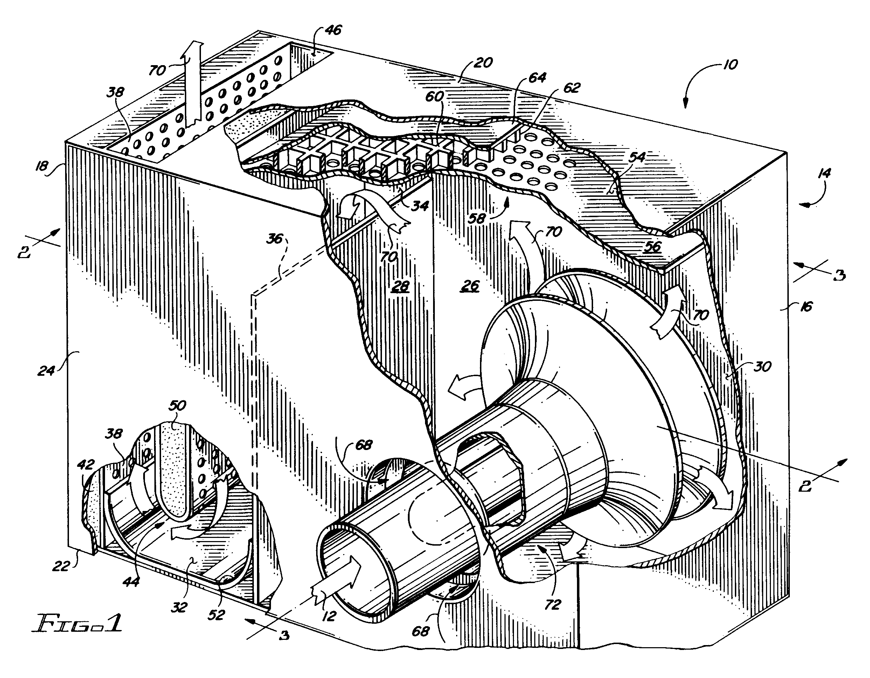

Figures 1 to 3 show a compact sound attenuator 10 which embodies principles of the present invention and which is used both to attenuate the noise associated with exhaust gas 12 discharged from a gas turbine engine (not shown) and to cool the exhaust gas prior to its discharge to atmosphere. The attenuator 10 comprises a housing 14 having a generally rectangular cross-section, opposite end walls 16 and 18, upper and lower side walls 20 and 22, and front and rear side walls 24 and 26. These end and side walls define within the housing an interior chamber which is divided by a baffle member 28 into first and second subchambers 30,32 which communicate through a transfer passage 34. The baffle 28 is positioned between the end walls 16 and 18, and extends upwardly from the lower side wall 22, terminating in an upper end 36 which defines the lower boundary of the transfer passage 34.

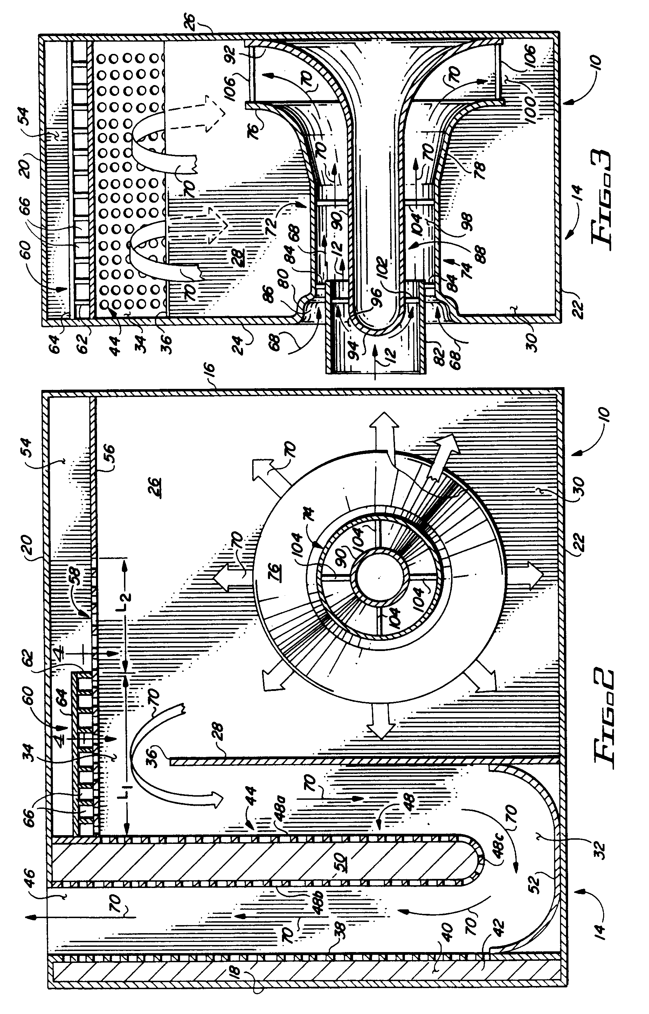

Spaced inwardly from the left end wall 18, and extending parallel thereto, is a perforated dividing wall 38 which defines with the end wall 18 a cavity 40 which is filled with a suitable bulk sound absorbing material 42. A hollow sound absorbing member 44 extends downwardly from the upper side wall 20 between the perforated interior wall 38 and the baffle 28, and defines in the second subchamber 32 a sound absorbing flow path having a serpentine configuration and extending between the transfer passage 34 and a housing outlet 46 formed through the upper side wall 20 between the perforated wall 38 and the sound absorbing member 44. The hollow sound absorbing member 44 has a perforated outer wall section 48 which extends between housing side walls 24,26 and has a generally U-shaped cross-section as viewed in Figures 1 and 2. The curved outer wall section 48 has a side wall portion 48ₐ facing the baffle 28, a side wall portion 48_{b} facing the perforated wall 38, and a rounded lower or inner end 48_{c} which faces and is spaced upwardly from the lower housing side wall 22. The interior cavity defined by the curved wall 48 is filled with a suitable bulk sound-absorbing material 50. As can be seen in Figure 2, the inner wall end 48_{c} is positioned closer to the lower housing side wall 22 than is the inner end 36 of the baffle 28.

A curved wall 52, having a generally U-shaped cross-section, is positioned at the bottom of second subchamber 32 and extends between the perforated wall 38 and the baffle 28. Together with the curved end 48_{c} of sound-absorbing member 44, the curved wall 52 serves to round off the lower end of the previously mentioned serpentine flow path, thereby reducing overall turning losses associated with such a flow path. The flow path extends from the transfer passage 34 downwardly between the baffle 28 and the perforated side wall 48ₐ, to the left between the curved wall 52 and curved inner wall end 48_{c} and upwards between the perforated wall 38 and the perforated side wall 48_{b} to the housing outlet 46.

At the top of the housing 14 there is a reactive sound attenuating chamber 54 which is defined by an interior dividing wall 56 that is positioned inwardly from the upper side wall 20 and extends between the sound absorbing member 44 and the housing end wall 16. The dividing wall 56 has a perforated section 58 which, as shown in Figure 2, extends rightwards from the sound absorbing member 44 to a central longitudinal portion of the wall 56. A resonant sound attenuator 60 is positioned within the reactive sound attenuating chamber 54 and comprises a latticed wall structure 62 and a covering wall 64.

The term "reactive", in the sound attenuation context used herein, means that the sound attenuation characteristics of the particular attenuator (i.e. the chamber 54) arise from, and are primarily effected by, its overall volume and configuration. Stated otherwise, the attenuation characteristics of a reactive attenuator are dimension-dominated. The term "resonant", on the other hand, means that the sound attenuation characteristics of the particular attenuator are, as to sound in flow thereto, resistance-dominated.

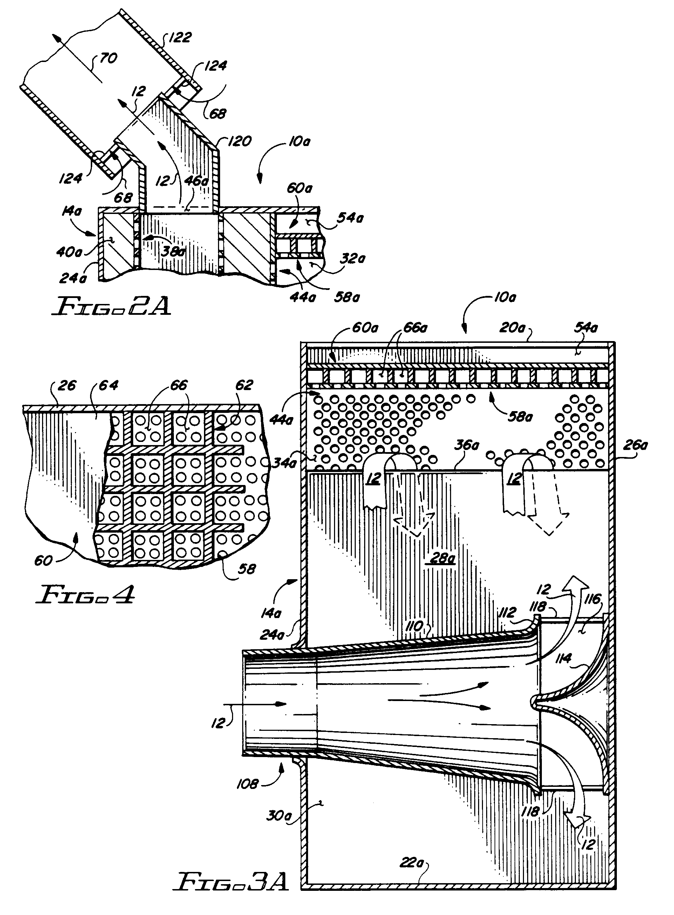

The latticed wall 62 has a lower side surface which is positioned against the upper surface of the perforated wall section 58 within the chamber 54. Perpendicularly extending lattice elements of the wall 62 define therein a multiplicity of sound attenuating cells 66 which communicate with the first and second subchambers 30,32 via the perforations in the wall section 58. As can best be seen in Figures 2 and 3, the latticed wall 62 extends completely between the housing walls 24,26 and extends to the right from the perforated wall 48 a distance L₁, thereby leaving a length L₂ of the perforated wall section 58 uncovered so that there is direct communication between the chambers 30 and 54 via the perforations in the wall section 58 along the length L₂ thereof. The height of the latticed wall structure 62 is less than the height of the chamber 54 so that the chamber 54 extends above and overlaps the latticed wall along its entire length and width. The solid covering wall 64 is suitably secured to the upper side surface of the latticed wall 62 thereby blocking off the upper ends of the multiplicity of the individual sound attenuating cells 66.

Engine exhaust gas 12 and ambient cooling air 68 are caused to flow into the first subchamber 30, and are mixed to form a cooled, diluted exhaust gas flow 70, by means of a compact inlet diffuser duct structure 72. The duct structure 72 includes a circularly cross-sectioned inlet duct 74 which extends inwards from the housing wall 24 and terminates at its right end (as viewed in Figures 1 and 3) in a generally bell-shaped outlet end 76 which is spaced to the left from the housing wall 26 within the subchamber 30. Immediately to the left of the bell-shaped outlet end 76, the inlet duct 74 has a radially outwardly flared diffusion section 78. At its left end, immediately adjacent the housing wall 24 the inlet duct has an outwardly flared section 80 around its periphery.

Extending coaxially into this enlarged inlet duct section 80 is an open ended, circularly cross-sectioned exhaust gas inlet stub duct 82. The duct 82 is of a smaller diameter than the main inlet duct 74, and is secured to it by means of a circumferentially spaced series of small support struts 84. The stub duct 82 defines with the flared inlet section 80 an annular eduction cooling air inlet 86.

The third component of the duct structure 72 is a core member 88 which has an elongate cylindrical central stem portion 90 of a diameter smaller than that of the stub duct 82, and a generally bell-shaped end portion 92. The stem 90 extends coaxially within the concentric ducts 74,82 and has a closed, rounded upstream end portion 94 which is received within the stub duct 82 and defines with it an annular inlet passage 96. The bell end portion of the core 88 is positioned immediately adjacent the housing wall 26 and has a surface curvature similar to that of the outlet end portion 76 of duct 74. The core 88 and duct 74 together define an annular flow passage 98 which terminates at its downstream end in an annular, radially outwardly facing discharge opening 100 positioned between the outer peripheries of the bell-shaped duct portions 76,92. The stem portion 90 of the core 88 is secured to the stub duct 82 and the main inlet duct 74 by circumferentially spaced series of support struts 102, 104 respectively, while the bell-shaped duct portions 76,92 are secured together by a circumferentially spaced series of axially extending support struts 106.

During operation of the attenuator 10, hot engine exhaust gas 12 is forced into the inlet stub duct 82 and into the main inlet duct 74 via the annular passage 96. Entry of the hot exhaust gas 12 into the duct 74 draws a flow of ambient cooling air 68 into the duct 74, via the annular air inlet 86, by means of eduction. The educted cooling air is mixed with the hot exhaust gas and is carried thereby towards the annular discharge opening 100 through the annular passage 98. As the exhaust gas-cooling air mixture flows towards the annular outlet, it traverses the diffusion section of the annular passage 98 defined in part by the flared wall section 78 of the main inlet duct 74. As can best be seen in Figure 3, as the exhaust gas-cooling air mixture 70 is forced closer to the outlet 100 it is further diffused due to an additional widening of the annular passage 98 adjacent the discharge opening 100. Finally, the exhaust gas-cooling air mixture 70 is forced radially outwardly through the discharge opening 100 in to the first subchamber 30 which, as will be seen, functions as an expansion chamber for the cooled gas mixture 70.

The diffusion of the gas-air mixture 70 in the annular passage 98 appreciably retards it velocity, thereby enhancing both further mixing and cooling of the flow streams 12 and 68, and reducing the exit velocity of the mixture from the annular discharge opening 100. This latter velocity reduction permits the discharge opening 100 to be placed in relatively close proximity to the inner surfaces of the housing (as best illustrated in Figure 2) while at the same time avoiding excessive turbulence of the discharged mixture as it flows against the housing inner surfaces.

As the exhaust gas-cooling air mixture 70 is discharged from the annular opening 100 into the subchamber 30, the mixture 70 is caused to expand abruptly within the chamber, thereby creating an acoustic propagation impedence mismatch between the flowing gas and the discharged gas. This impedence mismatch effects a low frequency noise attenuation within the expansion chamber 30 which is particularly effective in reducing the "core" noise component generated by the turbine engine. The magnitude of this low frequency noise reduction is established by the ratio of the expansion chamber cross-sectional area to the diffuser exit area (i.e., the area of the discharge opening 100), while the lowest frequency at which significant attenuation is achieved is determined by the volume of the chamber 30.

The low frequency noise reduction resulting from the previously described impedence mismatch is the first of three noise reduction mechanisms uniquely provided by the attenuator 10. The second noise reduction mechanism is the reactive and resonant sound attenuation provided by the reactive sound attenuating chamber 54 and the resonant attenuator structure 60, which as will be seen, are connected in a novel parallel and overlapping relationship.

More specifically, as the cooled exhaust gas 70 is discharged into the expansion chamber 30, residual noise in the gas is simultaneously transmitted into the resonant sound attenuator 60 via the portion L₁ of the perforated wall 58, and into the reactive sound attenuating chamber 54 through the portion L₂ of the wall 58. The chamber 54 functions to attenuate reactively additional low frequency noise in the cooled gas 70, while the latticed wall structure 62, with its covering wall 64, functions to attenuate mid and high frequency noise. It should be noted that the reactive sound attenuating chamber 54 not only overlaps the resonant sound attenuator 60, but also extends beyond its inlet (i.e. the portion L₂ of the perforated wall 58), in opposite directions (i.e. to the left and right of the wall inlet section L₂ as shown in Figure 2). This two dimensional "offset" feature of the chamber 54 allows its reactive attenuating characteristics to be "tuned" conveniently by appropriately correlating the length L₂, and the dimensional interrelationships between the volume of chamber 54 and the length, width and height of the resonant attenuator 60.

A third and final sound attenuating mechanism is provided by the baffle 28, the perforated end wall 38 and the sound absorbing member 44, and the serpentine discharge flow path which they collectively define. Subsequent to its discharge into the expansion chamber 30, the cooled exhaust gas 70 is forced over the upper baffle end 36, downwards between the baffle 28 and the sound absorbing member 44, around the lower end 48_{c} of the sound absorbing member, upwards between the sound absorbing member 44 and the perforated end wall 38, and outwards through the housing outlet 46. While following this serpentine flow path, residual mid and high frequency noise in the cooled exhaust gas 70 is absorptively removed. Additionally, the sound absorbing member 44 provides line-of-sight general sound attenuation between the upper baffle end 36 and the housing outlet 46.

In this way, the sound attenuator 10 very effectively attenuates both core and turbine noise from the turbine engine exhaust gas 12. The attenuator can accomplish this desirable result via its unique three fold sound suppression technique and uses a very compact structure which may be easily sized and configured to the precisely matched (from an overall sound attenuation standpoint) to a variety of turbine engines. Moreover, in addition to sound attenuation, the apparatus causes the hot exhaust gas 12 to be eduction cooled within the attenuator's housing (which is itself also cooled by the educted air flow). Finally, it is important to note that despite its compactness, the attenuator 10 imposes only a relatively low pressure drop upon the exhaust gas traversing it, and may be inexpensively constructed essentially entirely from sheet metal and conventional bulk sound absorbing material.

In Figures 2A and 3A an alternative embodiment 10ₐ of the attenuator 10 is illustrated, components similar to those in the previously described attenuator 10 being given the same reference numerals with the subscript "a". The attenuator 10ₐ is substantially identical to the attenuator 10, with the exception that the eduction cooling of the engine exhaust gas is performed externally of the attenuator at its downstream or outlet end. More specifically, the hot engine exhaust gas 12 is caused to flow into the expansion chamber 30ₐ via a non-educted inlet and diffusion duct 108 which has a circular cross-section and extends into the expansion chamber 30ₐ through the housing wall 24ₐ. Along a longitudinally central portion, the duct 108 has a diffusion section 110 which is tapered radially outwardly in the downstream direction. At its downstream end 112 the diffusion section 110 has an annular, outwardly flared portion which cooperates with a generally bell-shaped end member 114 to define an annular, radially outwardly facing outlet passage 116 positioned immediately adjacent the housing wall 26ₐ. The end member 114 is secured to the diffusion duct end portion 112 by a circumferentially spaced series of support struts 118.

During operation of the attenuator 10ₐ, the engine exhaust gas 12 flows into the duct 108, is diffused and slowed along the diffusion portion 110, and is forced into the expansion chamber 30ₐ via the radially facing annular outlet 116. From this point, the uncooled exhaust gas is forced through the attenuator 10ₐ in a manner identical to that previously described in conjuction with the attenuator 10. However, as the exhaust gas 12 leaves the discharge opening 46ₐ (Figure 2A), it enters a discharge duct 120 secured to the attenuator housing 14ₐ at the outlet 46ₐ. Surrounding the outer end of the discharge duct 120 is an eduction cooling duct 122. The eduction cooling duct 122 is substantially larger in cross-section than the discharge duct 120 and is secured to it by a mutually spaced series of support struts 124. Discharge of the exhaust gas 12 into the eduction duct 122 draws a flow of ambient cooling air 68 into the lower end (as shown in Figure 2A) of the eduction duct. The cooling air flow 68 is mixed with the exhaust gas 12 in the duct 122 to form a stream 70 of cooled exhaust gas which is discharged via the duct 122 to atmosphere. In this manner, a simplified duct work structure is provided for the attenuator 10ₐ so that eduction cooling of the exhaust gas is effected subsequent to the sound attenuation.

## Claims

1. A sound attenuation device (10) for turbine engine exhaust gases (12), comprising a housing (14) having an inlet duct (74) and a discharge flow path (70) leading to an outlet (46), in which the duct (74) is so shaped to discharge the gases (12) into the housing (14) with an abrupt expansion to cause an acoustic propagation impedance mismatch, and the housing (14) includes a reactive sound attenuation chamber (54) and a resonant sound attenuation structure (60), characterised by a sound absorbing member (44) within the housing (14) past which the gases pass to define a serpentine discharge flow path and by an eduction duct (82,122) for inducting a flow of cooling air (68) in response to the exhaust gas flow and mixing the induced cooling air flow with the exhaust gas flow.

2. A device as claimed in Claim 1, characterised in by a baffle (28) dividing the housing into first and second sub-chambers (26,24) communicating via a transfer passage (34), the duct (74) opening into the first subchamber (26) and the sound absorbing member (44) being within the second sub-chamber (24) whereby the baffle (28) also defines in part the serpentine discharge flow path (70).

3. A device as claimed in Claim 2 characterised in that the reactive sound attenuation chamber (54) is defined by a dividing wall (56) having a perforated section (58) communicating with the first sub-chamber (26), and the resonant sound attenuation structure (60) is positioned within the reactive sound attenuation chamber (59).

4. A device as claimed in Claim 3 characterised in that the resonant sound attenuation structure (60) includes a latticed wall structure (62), a first side of which extends along a portion of the perforated section (58) of the dividing wall (56) and a second side of which is covered.

5. A device as claimed in any preceding claim characterised in that the sound absorbing member (44) comprises a hollow perforated outer wall (48) and an interior space filled with a bulk sound absorbing material (50).

6. A device as claimed in Claim in any preceding Claim, characterised in that the eduction duct (82) is associated with the inlet duct (74).

7. A device as claimed in any preceding Claim, characterised by a gas exhaust duct (120) connected to the outlet (46a) to discharge the flow of exhaust gas (12) and in which the eduction duct (122) is associated with the exhaust duct (120).

8. A device as claimed in any preceding claim characterised in that the inlet duct (74) enters the housing through a first wall (24) in a first direction, and discharge opening (100) is positioned adjacent a second wall (26), opposite the first wall (24), and facing in a second direction, the second direction being generally perpendicular to the first direction.

9. A method of attenuating noise associated with exhaust gas (12) discharged from an engine, which comprises the following steps, in the sequence set forth: flowing the gas through a duct (74); discharging gas from the duct (74) into an expansion chamber (26) in an manner creating an acoustic propagation impedance mismatch between the duct and the expansion chamber (26); and presenting the discharged gas to a reactive sound attenuating chamber (54) in which resonant sound attenuating means (60) are positioned thereby transmitting sound from the discharged gas to the attenuating means (60); characterised by subsequently flowing the discharged gas through a serpentine flow path (70) defined in part by a sound absorbing member (44), and further characterised by educting cooling air from a source thereof for mixture with the gas.

## Patentansprüche

1. Schalldämpfungsvorrichtung (10) für die Abgase (12) von Turbinenmotoren, das ein Gehäuse (14) mit einem Einlaßkanal (74) und einem zu einem Auslasse (46) führenden Auslaßströmungsweg (70) aufweist, welcher Kanal (74) derart geformt ist, daß er die Gase (12) mit einer abrupten Erweiterung in das Gehäuse (14) entleert, um eine Impedanzfehlanpassung bei der Schallausbreitung zu verursachen, wobei das Gehäuse (14) eine reaktive Schalldämpfungskammer (54) und eine Resonanzschalldämpfungskonstruktion (60) aufweist, gekennzeichnet durch ein Schallabsorptionsglied (44) innerhalb des Gehäuses (14), an dem die Gase vorbeiströmen, um einen Serpentinen-Auslaßströmungsweg zu bilden, und durch einen Einsaugkanal (82,122) zum Einführen eines Stromes an Kühlluft (68) auf Grund der Abgasströmung sowie zum Mischen des eingeführten Kühlluftstromes mit dem Abgasstrom.

2. Vorrichtung nach Anspruch 1, gekennzeichnet durch eine Leitfläche (28), welche das Gehäuse in erste und zweite Sub-Kammern (26,24) unterteilt, die über einen Übertragungsdurchlaß (34) miteinander in Verbindung stehen, wobei sich der Kanal (74) in die erste Sub-Kammer (26) hin öffnet und sich das Schallabsorptionsglied (44) innerhalb der zweiten Sub-Kammer (24) befindet, wodurch die Leitfläche (28) teilweise auch den serpentinenförmigen Auslaßströmungsweg (70) begrenzt.

3. Vorrichtung nach Anspruch 2, dadurch gekennzeichnet, daß die reaktive Schalldämpfungskammer (54) durch eine Unterteilungswand (56) mit einem perforierten Abschnitt (58) begrenzt ist, welcher mit der ersten Sub-Kammer (26) in Verbindung steht, und daß die Resonanzschalldämpfungskonstruktion (60) innerhalb der reaktiven Schalldämpfungskammer (59) angeordnet ist.

4. Vorrichtung nach Anspruch 3, dadurch gekennzeichnet, daß die Resonanzschalldämpfungskonstruktion (60) eine Gitterwandkonstruktion (62) aufweist, von der sich eine erste Seite entlang eines Teiles des perforierten Abschnittes (58) der Unterteilungswand (56) erstreckt und eine zweite Seite derselben abgedeckt ist.

5. Vorrichtung nach einem der vorhergehenden Ansprüche, dadurch gekennzeichnet, daß das Schallabsorptionsglied (44) eine hohle, perforierte Außenwand (48) aufweist und einen Innenraum, der mit einer Masse von schallabsorbierenden Material (50) gefüllt ist.

6. Vorrichtung nach einem der vorhergehenden Ansprüche, dadurch gekennzeichnet, daß der Einsaugkanal (82) dem Einlaßkanal (74) zugeordnet ist.

7. Vorrichtung nach einem der vorhergehenden Ansprüche, gekennzeichnet durch einen Gasauslaßkanal (120), der mit dem Auslasse (46a) zum Ausstoßen des Stromes von Abgas (12) verbunden ist, und in dem ein Einsaugkanal (122) dem Auslaßkanal (120) zugeordnet ist.

8. Vorrichtung nach einem der vorhergehenden Ansprüche, dadurch gekennzeichnet, daß der Einlaßkanal (74) in das Gehäuse durch eine erste Wand (24) hindurch in einer ersten Richtung eintritt und die Auslaßöffnung (100) einer zweiten, der ersten Wand (24) gegentiberliegenden, in eine zweite Richtung gekehrten Wand (26) benachbart angeordnet ist, wobei die zweite Richtung im wesentlichen senkrecht zur ersten Richtung gelegen ist.

9. Verfahren zum Dämpfen des mit dem aus einem Motor ausgestoßenen Abgas (12) verbundenen Geräusches, das die folgenden Schritte in der dargelegten Abfolge aufweist: Strömen des Gases durch einen Kanal (74); Entleeren des Gases aus dem Kanal (74) in eine Expansionskammer (26) in einer derartigen Weise, daß sie eine Impedanzfehlanpassung bei der Schallausbreitung zwischen dem Kanal und der Expansionskammer (26) erzeugt; und Präsentieren des entleerten Gases an eine reaktive Schalldämpfungskammer (54), in der Dämpfungseinrichtungen (60) für den Resonanzschall angeordnet sind, wodurch Schall vom entleerten Gas auf die Dämpfungseinrichtungen (60) übertragen wird; gekennzeichnet durch anschließendes Strömen des entleerten Gases durch einen Serpentinenströmungsweg (70), der teilweise durch ein Schallabsorptionsglied (44) begrenzt ist, und ferner gekennzeichnet durch das Einsaugen von Kühlluft aus einer Quelle derselben zum Mischen mit dem Gas.

## Revendications

1. Dispositif d'atténuation du son (10) pour les gaz (12) d'échappement d'un moteur à turbine, comprenant un logement (14) ayant une conduite d'entrée (74) et un trajet d'écoulement de décharge (70) conduisant à une sortie (46), dans lequel la conduite (74) est façonnée de manière à décharger les gaz (12) dans le logement (14) avec une détente brutale de manière à provoquer une désadaptation des impédances de propagation acoustiques, et le logement (14) comporte une chambre réactive d'atténuation du son (54) et une structure résonante d'atténuation du son (60), caractérisé par un élément d'absorption du son (44) à l'intérieur du logement (14) au droit duquel passent les gaz afin de définir un trajet d'écoulement de décharge en serpentin et par une conduite d'émission (82, 122) pour produire un écoulement d'air de refroidissement (68) en réponse à l'écoulement des gaz d'échappement et mélanger l'écoulement d'air de refroidissement produit avec l'écoulement des gaz d'échappement.

2. Dispositif selon la revendication 1, caractérisé par un déflecteur (28) divisant le logement en des première et seconde chambres secondaires (26, 24) qui communiquent via un passage de transfert (34), la conduite (74) débouchant dans la première chambre secondaire (26) et l'élément d'absorption du son (44) se trouvant dans la seconde chambre secondaire (24), d'où il résulte que le déflecteur (28) définit aussi en partie le trajet en serpentin d'écoulement de la décharge (70).

3. Dispositif selon la revendication 2, caractérisé en ce que la chambre réactive d'atténuation du son (54) est définie par une cloison (56) ayant une section perforée (58) qui communique avec la première chambre secondaire (26), et la structure résonante d'atténuation du son (60) est placée à l'intérieur de la chambre réactive d'atténuation du son (59).

4. Dispositif selon la revendication 3, caractérisé en ce que la structure résonante d'atténuation du son (60) comporte une structure de paroi en treillis (62), dont un premier côté s'étend le long d'une partie de la section perforée (58) de la cloison (56) et dont le second côté est recouvert.

5. Dispositif selon l'une quelconque des revendications précédentes, caractérisé en ce que l'élément d'absorption du son (44) comprend une paroi extérieure perforée creuse (48) et un espace intérieur rempli d'un matériau en vrac d'absorption du son (50).

6. Dispositif selon l'une quelconque des revendications précédentes, caractérisé en ce que la conduite d'émission (82) est associée à la conduite d'entrée (74).

7. Dispositif selon l'une quelconque des revendications précédentes, caractérisé par une conduite d'échappement des gaz (120) reliée à la sortie (46a) pour décharger l'écoulement des gaz d'échappement (12) et dans lequel la conduite d'émission (122) est associée à la conduite d'échappement (120).

8. Dispositif selon l'une quelconque des revendications précédentes, caractérisé en ce que la conduite d'entrée (74) entre dans le logement par l'intermédiaire d'une première paroi (24) dans une première direction, et une ouverture de décharge (100) est placée dans le voisinage d'une seconde paroi (26), opposée à la première paroi (24), et dirigée dans une seconde direction, la seconde direction étant généralement perpendiculaire à la première direction.

9. Procédé d'atténuation du bruit associé à des gaz d'échappement (12) déchargés par un moteur, qui comprend les étapes suivantes, dans la séquence indiquée, consistant à : faire s'écouler le gaz dans une conduite (74); décharger le gaz de la conduite (74) dans une chambre de détente (26) de manière à créer une désadaptation des impédances de propagation acoustiques entre la conduite et la chambre de détente (26); et présenter le gaz déchargé à une chambre réactive d'atténuation du son (54) dans laquelle des moyens résonants d'atténuation du son (60) sont placés, d'où la transmission du son entre le gaz déchargé et les moyens d'atténuation; caractérisé par l'étape ultérieure consistant à faire circuler le gaz déchargé dans un trajet d'écoulement en serpentin (70) défini en partie par un élément d'absorption du son (74), et caractérisé en outre par l'étape d'émission d'air de refroidissement à partir d'une source d'air pour mélange avec le gaz.
